# EUROPEAN PATENT APPLICATION

(11) **EP 1 630 177 A1**
(43) Date of publication of application: **01.03.2006**
(21) Application number: 05007041.6
(22) Date of filing: 31.03.2005
(51) Int. Cl.: C08F 2/28, C08F 212/08, C08F 220/14, C08F 2/06, D21H 21/16, D21H 17/44

(54) **Cationic dispersions for sizing paper**

(30) Priority: 01.04.2004 FR 0403439
(71) Applicant: CLARIANT INTERNATIONAL LTD., 4132 Muttenz 1 (CH)
(72) Inventor: Jonckheree, Eric, 60350 Cuise la Motte (FR); Corpet, Damien, 71380 Oslon (FR)

(57) **Abstract**

Cationic aqueous polymer dispersion comprising fine particles, comprising at least:
(1) the product of an emulsion polymerization of a monomer mixture comprising, by weight:
   (a) from 20% to 65% of at least one optionally substituted styrene,
   (b) from 25% to 80% of at least one C₁-C₁₈ (meth)acrylic ester,
   (c) from 0 to 20% of at least one ethylenically unsaturated nonionic monomer other than (a) and (b),
   (d) from 0 to 20% of at least one C₃-C₆ ethylenically unsaturated carboxylic acid or a corresponding salt thereof,
      the sum of (a) + (b) + (c) + (d) being 100% by weight,
      the monomer mixture being polymerized in the presence of an emulsifier that is the product of a solution polymerization of a monomer mixture comprising, by weight:
   (e) from 15% to 50% of at least one monomer of formula (I) or of formula (II) 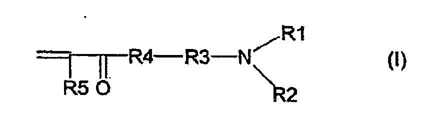 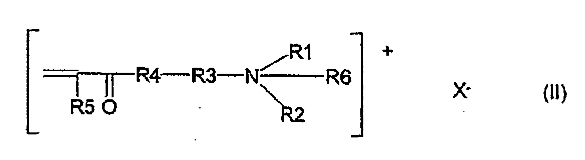 in which:
      - R1 and R2: are identical or different and represent a C₁-C₄ alkyl radical,
      - R3: represents a C₁-C₈ alkylene radical,
      - R4: represents O or NH,
      - R5: represents H or CH₃,
      - R6: represents a C₁-C₄ alkyl radical,
      - X⁻: represents OH⁻, Cl⁻, Br⁻ or CH₃-OSO₃H⁻,
   (f) from 50% to 85% of at least one optionally substituted styrene,
   (g) from 0 to 20% of at least one ethylenically unsaturated nonionic monomer other than e) and f),
   (h) from 0 to 20% of at least one C₃-C₆ ethylenically unsaturated carboxylic acid or a corresponding salt thereof,
   the sum of (e) + (f) + (g) + (h) being equal to 100% by weight,
   the solution polymerization being performed in the presence of a water-miscible solvent,
(2) glyoxal.

## Description

The present invention relates to the field of sizing paper and in particular to sizing agents based on cationic aqueous polymer dispersions comprising fine particles.

The invention also relates to a process for obtaining such dispersions.

It is known practice to use sizing agents in the preparation of cellulose-based products such as papers or boards.

In general, there are two kinds of sizing agent: surface sizes and internal sizes.

The term "surface size" means an agent applied to the surface of the cellulose-based material, for example using a sizing press.

The term "internal size" means an agent added to the fibres in the wet part during the manufacture of the cellulose-based material.

A good surface size makes it possible to obtain good resistance to the penetration of aqueous liquids, for instance inks, and also good surface properties, which are particularly important for printability.

Most of the surface sizes known to those skilled in the art exist in the form of anionic or cationic dispersions. Several synthetic methods are possible, especially via emulsion polymerization using a cationic copolymer.

DE-A-2 454 397 describes cationic aqueous polymer dispersions prepared by emulsion copolymerization of ethylenically unsaturated monomers in the presence of a cationic copolymer. The preparation of the cationic copolymer is performed by solution polymerization using monomers containing tertiary or quaternary amino groups in the presence of water-miscible organic solvents. This process has the drawback of using volatile organic solvents, which must be removed before or after the emulsion polymerization.

EP-A-051 144 describes the use of an ethylenically unsaturated carboxylic acid or of maleic anhydride to obtain an amphoteric cationic copolymer as an aqueous dispersion. However, these dispersions have the drawback of foaming during the surface sizing of paper.

EP-A-1 180 527 describes the preparation of a cationic copolymer without using any, or using only very little, volatile organic solvents.

Cationic aqueous dispersions of polymers with a low particle size, which give good hydrophobicity to treated papers and/or boards and also good printability, are currently still being sought.

The Applicant has now found, surprisingly, that the application properties of these cationic aqueous polymer dispersions can be improved by adding glyoxal or a glyoxal-based compound.

The present invention thus relates to a cationic aqueous polymer dispersion, comprising fine polymer particles, characterized in that it comprises at least:
(1) the product of an emulsion polymerization of a monomer mixture comprising, by weight:
   (a) from 20% to 65% of at least one optionally substituted styrene,
   (b) from 35% to 80% of at least one C₁-C₁₈ (meth)acrylic ester,
   (c) from 0 to 20% of at least one ethylenically unsaturated nonionic monomer other than (a) and (b),
   (d) from 0 to 20% of at least one C₃-C₆ ethylenically unsaturated carboxylic acid or a corresponding salt thereof,
      the sum of (a) + (b) + (c) + (d) being 100% by weight,
      the monomer mixture being polymerized in the presence of an emulsifier that is the product of a solution polymerization of a monomer mixture comprising, by weight:
   (e) from 15% to 50% of at least one monomer of formula (I) or of formula (II) 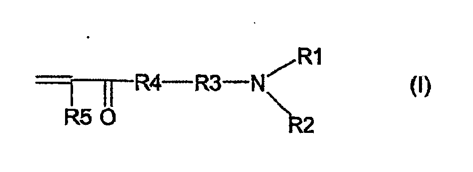 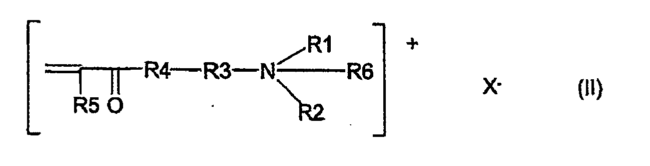 in which:
      R1 and R2 are identical or different and represent a C₁-C₄ alkyl radical,
      R3 represents a C₁-C₈ alkylene radical,
      R4 represents O or NH,
      R5 represents H or CH₃,
      R6 represents a C₁-C₄ alkyl radical,
      X⁻ represents OH⁻, Cl⁻, Br⁻ or CH₃-OSO₃H⁻,
   (f) from 50% to 85% of at least one optionally substituted styrene,
   (g) from 0 to 20% of at least one ethylenically unsaturated nonionic monomer other than e) and f),
   (h) from 0 to 20% of at least one C₃-C₆ ethylenically unsaturated carboxylic acid or a corresponding salt thereof,
   the sum of (e) + (f) + (g) + (h) being equal to 100% by weight,
the solution polymerization being performed in the presence of a water-miscible solvent,

### (2) glyoxal.

The emulsifier prepared according to the invention during the solution polymerization contains, as component (e), at least one nitrogenous monomer bearing an amino group and/or a quaternary amino group and corresponding to the general formulae (I) or (II) below: 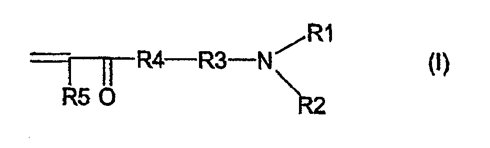 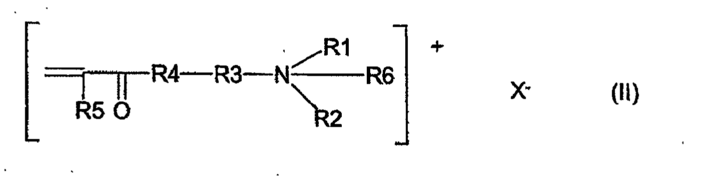 in which
R1 and R2 are identical or different and represent a C₁-C₄ alkyl radical,
R3 represents a C₁-C₈ alkylene radical,
R4 represents O or NH,
R5 represents H or CH₃,
R6 represents a C₁-C₄ alkyl radical,
X⁻ represents OH⁻, Cl⁻, Br⁻ or CH₃-OSO₃H⁻.

The term "C₁-C₄ alkyl radical" means, for example, a methyl, ethyl, propyl, i-propyl n-butyl, i-butyl or tert-butyl radical, preferably methyl or ethyl.

The term "C₁-C₈ alkylene radical" means a radical of formula CₙH₂ₙ with n = 1 to 8, for example -CH₂-, -CH₂-CH₂-, -CH₂-CH₂-CH₂- and -CH₂-C(Me)₂-CH₂-, and preferably -CH₂-CH₂- or -CH₂-CH₂-CH₂-.

Examples of monomers of formula (I) that may be mentioned include diethylaminoethyl (meth)acrylate, dimethylaminopropyl (meth)acrylate, dibutylaminopropyl (meth)acrylate, dimethylaminoneopentyl (meth)acrylate, dimethylaminopropyl(meth)acrylamide and diethylaminopropyl(meth)acrylamide.

The quaternary compounds of formula (II) are obtained by reacting the compounds of formula (I) with known quaternizing agents, for example ethyl chloride, ethyl bromide or dimethyl sulphate.

Examples of monomers of formula (II) that may be mentioned include acryloyloxyethyltrimethylammonium chloride, methacryloyloxyethyltrimethylammonium chloride, acrylamidopropyltrimethylammonium chloride and methacrylamidopropyltrimethylammonium chloride.

Monomers (e) that are particularly preferred include the compounds of formula (I) in which R1 and R2 are identical and represent a methyl or ethyl group, R3 represents a - CH₂-CH₂-CH₂- group, R4 represents NH and R5 represents H or a methyl group.

The monomers of the group (g) may be used in an amount from about 15% to 50% by weight, conveniently from about 20% to 40% by weight and preferably from about 25% to 35% by weight, based on the weight of the monomers used for the solution polymerization of the emulsifier.

The monomers of the group (f) comprise monomers chosen from the group consisting of styrene and optionally substituted styrene.

The styrene substituents are preferably C₁-C₄ alkyl radicals and halogen atoms, especially chlorine. One or more substituents may be present, for example 2 substituents.

Examples of substituted styrenes that may be mentioned include α-methylstyrene, α-ethylstyrene, vinyltoluenes and chlorostyrenes. Styrene is preferred.

The monomers of the group (f) may be used in an amount from about 50% to 85% by weight, especially from 51 % to 75% by weight and preferably from about 53% to 73% by weight, based on the weight of the monomers used for the solution polymerization of the emulsifier.

The monomers of the group (g) comprise ethylenically unsaturated nonionic monomers other than (e) and (f). Examples that may be mentioned include nitriles such as acrylonitrile and methacrylonitrile, amides such as methacrylamide, acrylamide, N-alkanolamides in which the N-alkanol group contains from 1 to 18 carbon atoms, and is preferably C₁-C₄, such as N-methylolacrylamide or N-methylolmethacrylamide, vinyls such as vinyl acetate and vinyl propionate, esters of methacrylic or acrylic acid with C₁-C₁₈ alcohols, such as methyl acrylate, methyl methacrylate, ethyl acrylate, ethyl methacrylate, propyl acrylate, propyl methacrylate, isopropyl acrylate, isopropyl methacrylate, n-butyl, isobutyl or tert-butyl acrylate, n-butyl, isobutyl or tert-butyl methacrylate, hexyl acrylate, hexyl methacrylate, ethylhexyl acrylate, ethylhexyl methacrylate, stearyl acrylate, stearyl methacrylate, monoethylenically unsaturated carboxylic acid hydroxyalkyl esters in which the hydroxyalkyl group contains from 1 to 18 carbon atoms, and is preferably C₁-C₄, such as 2-hydoxyethyl acrylate, 3-hydroxypropyl acrylate, 2-hydroxyethyl methacrylate and 3-hydroxypropyl methacrylate.

The monomers of the group (g) may be used in an amount of from 0 to about 20% by weight, preferably from 0 to about 10% by weight, particularly from 0 to about 5% by weight and more particularly 0% by weight, based on the weight of the monomers used for the solution polymerization of the emulsifier.

The monomers of the group (h) comprise C₃-C₆ and preferably C₃-C₄ ethylenically unsaturated carboxylic acids or the corresponding salts thereof, for example monocarboxylic acids, for instance acrylic acid and methacrylic acid, dicarboxylic and tricarboxylic acid hemiesters, for instance C₁-C₄ monoesters of maleic acid or of fumaric acid, dicarboxylic acids such as maleic acid, fumaric acid and itaconic acid, tricarboxylic acids such as aconitic acid and the C₁-C₄ monoester or diester equivalents thereof.

The salts may be prepared from the corresponding carboxylic acids by treating the monomers with various bases, for instance sodium hydroxide, potassium hydroxide, ammonia or various amines to give partially or totally neutralized monomers.

Monomers in free acid form and more particularly acrylic acid or methacrylic acid are preferably used.

The monomers of the group (h) may be used in an amount of from 0 to about 20% by weight and preferably from about 10% to 20% by weight based on the weight of the monomers used for the solution polymerization of the emulsifier.

The sum of the parts by weight of (e), (f), (g) and (h) is equal to 100% by weight.

For the preparation of the cationic polymer dispersions according to the invention, monomers chosen from the group consisting of styrene and optionally substituted styrene are used as monomers of the group (a).

The styrene substituents are preferably C₁-C₄ alkyl radicals and halogen atoms, especially chlorine. One or more substituents may be present, for example 2 substituents.

Examples of substituted styrenes that may be mentioned include α-methylstyrene, α-ethylstyrene, vinyltoluenes and chlorostyrenes. Styrene is preferred.

Styrene is particularly preferred.

The monomers of the group (a) may be used in an amount from about 20% to 65% by weight, conveniently from about 25% to 60% by weight and preferably from about 30% to 60% by weight, based on the weight of the monomers used for the emulsion polymerization.

The monomers of the group (b) comprise C₁-C₁₈ (meth)acrylic esters preferably such as methyl acrylate, methyl methacrylate, ethyl acrylate, ethyl methacrylate, propyl acrylate, propyl methacrylate, isopropyl acrylate, isopropyl methacrylate, n-butyl, isobutyl or tert-butyl acrylate, n-butyl, isobutyl or tert-butyl methacrylate, hexyl acrylate, hexyl methacrylate, ethylhexyl acrylate, ethylhexyl methacrylate, stearyl acrylate or stearyl methacrylate.

It is also possible to use mixtures of the abovementioned monomers, for example mixtures of methyl methacrylate and of butyl acrylate.

The monomers of the group (b) may be used in an amount from about 35% to 80% by weight, conveniently from about 38% to 75% by weight and preferably from about 40% to 70% by weight, based on the weight of the monomers used for the emulsion polymerization.

The monomers of the group (c) comprise ethylenically unsaturated nonionic monomers other than a) and b). Examples that may be mentioned include nitriles such as acrylonitrile and methacrylonitrile, amides such as methacrylamide, acrylamide and N-alkanolamides in which the N-alkanol group contains from 1 to 18 and preferably from 1 to 6 carbon atoms, such as N-methylolacrylamide and N-methylolmethacrylamide, vinyls such as vinyl acetate and vinyl propionate, monoethylenically unsaturated carboxylic acid hydroxyalkyl esters in which the hydroxyalkyl group contains from 1 to 18 and preferably from 1 to 6 carbon atoms, such as 2-hydroxyethyl acrylate, 3-hydroxypropyl acrylate, 2-hydroxyethyl methacrylate and 3-hydroxypropyl methacrylate.

The monomers of the group (c) may be used in an amount of from 0 to about 20% by weight, preferably from 0 to about 10% by weight, particularly from 0 to about 5% by weight and more particularly 0% by weight, based on the weight of the monomers used for the emulsion polymerization.

The monomers of the group (d) comprise C₃-C₆ and preferably C₃-C₄ ethylenically unsaturated carboxylic acids or the corresponding salts thereof, for example monocarboxylic acids, for instance acrylic acid and methacrylic acid, dicarboxylic and tricarboxylic acid hemiesters, for instance C₁-C₄ monoesters of maleic acid or of fumaric acid, dicarboxylic acids such as maleic acid, fumaric acid and itaconic acid, tricarboxylic acids such as aconitic acid, and the equivalent C₁-C₄ monoesters or diesters thereof.

The salts may be prepared from the corresponding carboxylic acids by treating the monomers with various bases, for instance sodium hydroxide, potassium hydroxide, ammonia or various amines to give partially or totally neutralized monomers.

Monomers in free acid form and more particularly acrylic acid or methacrylic acid are preferably used.

The monomers of group (d) may be used in an amount of from 0 to about 20% by weight, preferably from 0 to about 10% by weight and particularly from 0 to about 5% by weight, based on the weight of the monomers used for the emulsion polymerization.

The sum of the parts by weight of (a), (b), (c) and (d) is equal to 100% by weight.

The glyoxal used in the present invention is preferably in the form of an aqueous solution, and the usual industrial solutions having a glyoxal content of from 20% to 60% by weight and preferably from 30% to 50% by weight are advantageously used.

Formulations comprising free glyoxal may also be used.

As examples of formulations comprising free glyoxal, mention may be made of Cartabond® TSI, Cartabond® FI and Cartabond® FIW sold by the company Clariant.

The amount of glyoxal in the cationic aqueous polymer dispersions of the present invention may advantageously range from 0.2% to 15% by dry weight, preferably from 0.5% to 12% by dry weight and more preferably from 1% to 8% by dry weight.

Another subject of the invention is a process for preparing a cationic aqueous polymer dispersion comprising fine particles, characterized by:
(1) the preparation of an aqueous polymer dispersion by solution polymerization, in the presence of a water-miscible solvent, of a monomer mixture comprising, by weight:
   (e) from 15% to 50% of at least one monomer of formula (I) or of formula (II) 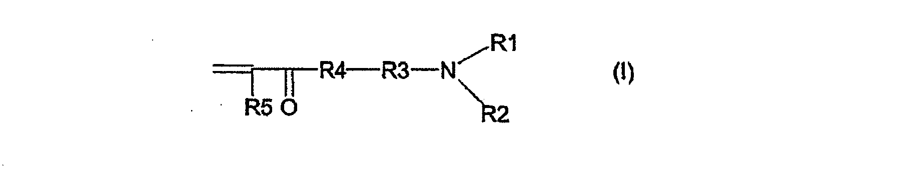 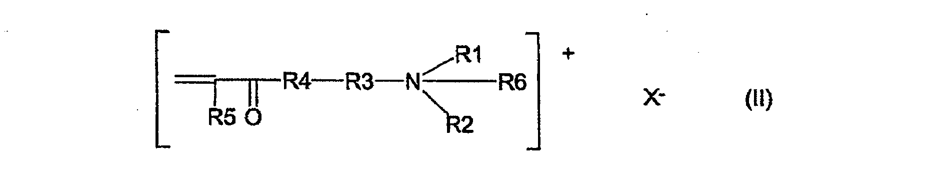 in which
      R1 and R2 are identical or different and represent a C₁-C₄ alkyl radical,
      R3 represents a C₁-C₈ alkylene radical,
      R4 represents O or NH,
      R5 represents H or CH₃,
      R6 represents a C₁-C₄ alkyl radical,
      X^{*-*} represents OH⁻, Cl⁻, Br or CH₃-OSO₃H⁻
   (f) from 50% to 85% of at least one optionally substituted styrene,
   (g) from 0 to 20% of at least one ethylenically unsaturated nonionic monomer other than e) and f)
   (h) from 0 to 20% of at least one C₃-C₆- ethylenically unsaturated carboxylic acid or a corresponding salt thereof, the sum of (e) + (f) + (g) + (h) being equal to 100% by weight,
   followed by the addition of water to obtain the said aqueous polymer dispersion, and
(2) the emulsion polymerization of a monomer mixture comprising, by weight:
   (a) from 20% to 65% of at least one optionally substituted styrene,
   (b) from 35% to 80% of at least one C₁-C₁₈ (meth)acrylic ester,
   (c) from 0 to 20% of at least one ethylenically unsaturated nonionic monomer other than a) and b),
   (d) from 0 to 20% of at least one C₃-C₆ ethylenically unsaturated carboxylic acid or a corresponding salt thereof, the sum of (a) + (b) + (c) + (d) being 100% by weight, in the presence of the said aqueous polymer dispersion, and
(3) addition of glyoxal.

The polymerization is performed in two steps, in which the monomers of the groups (e), (f), (g) and (h) are first polymerized via copolymerization in a water-miscible solvent using the conventional solution polymerization techniques described, for example, in "Encyclopedia of Polymer Science and Engineering, Vol. 15, Solution Polymerization, pages 402-418, John Wiley & Sons, Inc., 1989".

According to one preferred aspect of the process in accordance with the present invention, the solvent should dissolve the monomers as well as the copolymer that is formed.

Examples of solvents that are used include C₁-C₆ saturated carboxylic acids, alcohols such as methanol, ethanol or isopropanol, ketones such as acetone or methyl ethyl ketone, and amides such as dimethylformamide.

Mixtures of solvents may also be used, for example mixtures of C₁-C₆ saturated carboxylic acid and of acetone.

The C₁-C₆ saturated carboxylic acids may be chosen from the group consisting of optionally substituted saturated monocarboxylic acids and optionally substituted saturated dicarboxylic acids.

Saturated C₁-C₆ monocarboxylic acids such as formic acid, acetic acid, propionic acid, butyric acid, isobutyric acid, valeric acid, isovaleric acid, hexanoic acid, hydroxypropionic acid or hydroxybutyric acid are preferably used.

According to one preferred aspect of the invention, the solvent used contains not more than 15% by weight of water, preferably not more than 10% by weight of water and more particularly not more than 1 % by weight of water, based on the total amount of solvent used.

Advantageously, mixtures of acetone and glacial acetic acid are used, and glacial acetic acid is more advantageously used.

The solution polymerization is optionally performed in the presence of chain-transfer agents, for example thioglycolic acid or mercaptans, for instance ethanethiol, n-butanethiol, 1-dodecanethiol or tert-dodecanethiol.

The solution polymerization is preferably initiated with free-radical initiators of azo or peroxide type, such as azobisisobutyronitrile (AlBN), tert-butyl perbenzoate, benzoyl peroxide, tert-butyl hydroperoxide or hydrogen peroxide.

The free-radical initiator may be added in solid or liquid form or dissolved in a water-miscible solvent as defined above.

The polymerization temperature for the solution polymerization is preferably between 30°C and 100°C and more preferably between 60°C and 90°C, and will be adapted to the initiating system used.

The solution polymerization is preferably performed under an inert atmosphere such as a nitrogen atmosphere, and for a time ranging from 1 to 10 hours.

According to one preferred aspect of the invention, the water-miscible solvent(s) is (are) initially introduced totally or partially into the reactor.

According to another preferred aspect of the invention, the monomers, the free-radical initiators, and, optionally, the chain-transfer agents are initially introduced totally or partially into the water-miscible solvent(s).

At the end of the solution polymerization, the emulsifier obtained is either isolated or diluted directly with water.

Preferably, the emulsifier obtained is diluted directly with water to obtain an aqueous polymer dispersion.

The concentration of the aqueous polymer dispersion ranges between 2% and 30% by weight, preferably between 5% and 25% by weight and more preferably between 10% and 20% by weight.

The aqueous polymer dispersion, from which the organic solvents may optionally be stripped by distillation, serves as emulsifier for the second stage of the polymerization, during which the monomers from groups (a) to (d) are emulsion-copolymerized using the conventional techniques known to those skilled in the art and described, for example, in "Encyclopedia of Polymer Science and Engineering, Vol. 6, Emulsion Polymerization, pages 1-51, John Wiley & Son, Inc., 1986".

The two stages of the process may be performed in the same container ("one-pot") without isolation of the emulsifier.

A usual free-radical-initiating system is also preferably used during the emulsion polymerization step.

The free-radical initiator may be a water-soluble initiator such as ammonium persulphate, potassium persulphate or sodium persulphate, optionally combined with a reducing agent such as sodium metabisulphite, or alternatively hydrogen peroxide or a hydroperoxide, for instance tert-butyl hydroperoxide, optionally combined with a reducing agent, for instance ascorbic acid or iron (II) sulphate.

This initiator may also be organosoluble, for instance azo derivatives such as azobisisobutyronitrile (AIBN) or organic peroxides.

The emulsion polymerization temperature is preferably between 30°C and 700°C and more preferably between 60°C and 90°C, and will be adapted to the initiating system used.

The emulsion polymerization is preferably performed under an inert atmosphere such as a nitrogen atmosphere, and for a time ranging from 0.5 hour to 10 hours.

The monomers of groups (a) to (d) are preferably added continuously to the reactor, either as a mixture or separately of each other, the addition possibly being uniform or non-uniform.

During the emulsion polymerization, the monomers are introduced into the reactor either in undiluted form or in the form of an aqueous solution.

For the emulsion of the monomers in water, a portion of the aqueous polymer dispersion from the first polymerization stage may be used, but common emulsifiers may also be used.

According to one preferred aspect of the invention, only a portion of the free-radical-initiating system is initially introduced before the addition of the monomers into the emulsifier obtained during the first polymerization stage, and the rest is then added continuously during the emulsion polymerization.

According to another preferred aspect of the invention, the continuous addition of the monomers and the continuous addition of the free-radical-initiating system begin simultaneously.

If, according to one preferred aspect of the invention, a free-radical initiator is used in combination with a reducing agent, the reducing agent is preferably introduced initially before the start of the emulsion polymerization.

It is also possible, during or after the emulsion polymerization, to use other common cationic, anionic, amphoteric or nonionic emulsifiers in order to modify the application properties of the dispersion of the present invention.

Examples that may be mentioned include alkyl sulphates, alkylaryl sulphonates, ethoxylated fatty alcohols, quaternary alkylammonium salts, for instance alkyldimethylbenzylammonium chlorides, distearyldimethylammonium chloride or lauryltrimethylammonium chloride, and alkyldimethylamines.

According to one variant of the process, an organosoluble free-radical initiator may be added at the end of the emulsion polymerization to reduce the content of residual monomers.

Organic peroxides such as dibenzoyl peroxide, di-tert-butyl peroxide, tert-butyl hydroperoxide or cumyl hydroperoxide are preferably used.

The pH of the emulsion polymerization product is preferably between 2 and 5 and may be optionally adjusted by addition of acids, bases or buffers.

The cationic aqueous polymer dispersions comprising fine particles are obtained according to the invention by introducing, with stirring, glyoxal into the emulsion polymerization product.

This introduction is preferably performed at a temperature below or equal to 30°C and more preferably at room temperature:

The cationic dispersions of the present invention may contain various additives.

Examples that may be mentioned include preserving agents, antifoams and optical brighteners.

Mention may also be made of electrolytes such as aluminium salts, which facilitate the binding of the dispersions of the present invention. Examples of suitable aluminium salts include aluminium sulphate, aluminium formate, aluminium chloride and polyalurninium chloride.

The cationic dispersions of the invention have a dry extract of between 20% and 50% and preferably between 20% and 40%.

They have a mean particle size of between 50 nm and 200 nm and preferably less than 150 nm.

Furthermore, they have a low viscosity, preferably of less than 100 mPa.s.

They are free or virtually free of volatile solvents (less than 5% by weight, preferably less than 1 % by weight and more preferably free of volatile solvents) and have a low foam tendency.

They have very good compatibility with the starches that may be used in the sizing press, this holding true even at high temperature.

They have very good stability over time and also very good mechanical stability.

They also have high hydrophobicity.

These properties justify the use of the cationic dispersions of the present invention as internal sizes or surface sizes for treating papers and boards.

The invention thus also relates to the application of a cationic aqueous polymer dispersion comprising fine particles, defined above, as an internal size or a surface size for the treatment of cellulose-based products.

The dispersions of the present invention are particularly useful for the surface sizing of papers and boards, for instance printing paper, newspaper paper, recycled paper, wrapping paper, test-liner paper and flat board.

The use of the dispersions in accordance with the invention as surface sizes is generally performed in combination with components conventionally used in surface sizing, such as starch and/or starch derivatives.

The dispersions in accordance with the invention having high dry extracts may be diluted with water or mixed with aqueous solutions before use, for example aqueous solutions of starch and/or of starch derivatives.

The dispersions of the present invention may be incorporated into the cellulose-based fibre pulp after refining it but before it has been transformed into sheets, optionally in combination with other internal sizes such as alkylketene dimer (AKD) and alkylsuccinic anhydrides (ASA).

The dispersions of the present invention may also be applied to the surface of the cellulose-based material, generally together with materials conventionally used for surface sizing, for instance starch, starch derivatives or mineral fillers, followed by drying. The application is generally performed by spraying or dipping, for example using a sizing press.

A subject of the present patent application is thus also a process for manufacturing paper or board, in which the said paper or board is prepared conventionally, but a dispersion of the present invention is incorporated into the cellulose fibre pulp after it has been refined, but before it has been transformed into sheets.

A subject of the present patent application is also a process for making paper or board, in which the said paper or board is prepared conventionally, but a dispersion of the present invention is applied to the surface of the cellulose material.

Finally, a subject of the present invention is a paper or board manufactured using the process described above.

### EXAMPLES

The mean particle diameter measurements were taken by means of the PCS (Photon Correlation Spectroscopy) technique using a Malvern 2C Autosizer.

### EXAMPLE 1

99.4 g of styrene, 54.7 g of dimethylaminopropylmethacrylamide, 31.2 g of 80% acrylic acid, 99.4 g of glacial acetic acid and 1.7 g of AIBN are introduced, in order, into a 2 I reactor equipped with a mechanical stirring system.

The mixture is brought to 85°C ± 1°C under nitrogen and with stirring. When the temperature is reached, the solution is left at 85°C for 1 hour. 2.1 g of AlBN in 8.3 g of acetone are then introduced and the mixture is left to react for a further 1 hour.

722.7 g of water are then added to the polymer in order to obtain an oligomer in solution.

66.2 g of this oligomer are taken in order to be introduced into the preemulsion.

A continuous emulsion polymerization is performed on the rest of the oligomer solution.

At a temperature maintained at 85°C, 7 g of 1% iron sulphate solution and then 33.1 g of 6% aqueous hydrogen peroxide solution are added to the oligomer. With the aid of metering pumps, a preemulsion consisting of 109.4 g of styrene, 208.8 g of butyl acrylate, 66.2 g of oligomer and 489.67 g of water are added over 2 hours. In parallel and over the same period. 132.5 g of 6% aqueous hydrogen peroxide solution are added. When the addition of the various components is complete, the reaction medium is maintained at the said temperature for a further 1 hour, and the mixture is then cooled with gentle stirring.

When the temperature of the latex obtained is close to room temperature (below 30°C), 105 g of Cartabond TSI are introduced with stirring.

The cationic aqueous dispersion obtained has the following characteristics:
- dry extract = 30.4%
- Brookfield viscosity at 23°C = 42 mPa.s
- pH = 3.7
- mean particle diameter = 129 nm

### EXAMPLE 2

The procedure of Example 1 is repeated completely up to the cooling of the product.

When the temperature of the latex obtained is close to room temperature (below 30°C), 352 g of Cartabond TSI are introduced with stirring.

The cationic aqueous dispersion obtained has the following characteristics:
- dry extract = 31.6%
- Brookfield viscosity at 23°C = 42 mPa.s
- pH = 3.7
- mean particle diameter = 129 nm

### EXAMPLE 3

114.6 g of styrene, 62 g of dimethylaminopropylmethacrylamide, 35.8 g of 80% acrylic acid, 161.6 g of glacial acetic acid and 8 g of AIBN are introduced, in order, into a 2 l reactor equipped with a mechanical stirring system.

The mixture is brought to 85°C ± 1 °C with stirring and under nitrogen. When the temperature is reached, the solution is left at 85°C for 1 hour. 2.4 g of AIBN in 67.8 g of glacial acetic acid are then introduced and the mixture is left to react for a further 1 hour.

771.4 g of water are then added to the polymer in order to obtain an oligomer in solution.

A continuous emulsion polymerization is performed in the oligomer solution prepared.

At a temperature maintained at 85°C, 7.6 g of 1% iron sulphate solution and then 38 g of 6% aqueous hydrogen peroxide solution are added to the oligomer. With the aid of metering pumps, 181.6 g of styrene, and 181.6 g of butyl acrylate are added over 2 hours. In parallel and over the same period, 151.4 g of 6% aqueous hydrogen peroxide solution are added. Once the additions are complete, 20.6 g of water are added to rinse the pumps. When the addition of the various components is complete, the reaction medium is maintained at the said temperature for a further 1 hour and the mixture is then cooled with gentle stirring.

When the temperature of the latex obtained is close to room temperature (below 30°C), 94 g of Cartabond TSI are introduced with stirring.

The cationic aqueous dispersion obtained has the following characteristics:
- dry extract = 33.5%
- Brookfield viscosity at 23°C = 46 mPa.s
- pH = 3.4
- mean particle diameter = 60 nm

### EXAMPLE 4

105.7 g of styrene, 40.1 g of dimethylaminopropylmethacrylamide and 119.9 g of glacial acetic acid are introduced, in order, into a 2 l reactor equipped with a mechanical stirring system.

The mixture is heated to 85°C ± 1°C with stirring and under nitrogen. When the temperature is reached, 2,1 g of AlBN in 13.4 g of acetone are then introduced and the mixture is left to react for a further 1 hour.

1240 g of water are then added to the polymer in order to obtain an oligomer in solution.

A continuous emulsion polymerization is performed in the oligomer solution prepared.

At a temperature maintained at 85°C, 20 g of 1% iron sulphate solution are added to the oligomer.

With the aid of metering pumps, 129.5 g of styrene and 92.5 g of butyl acrylate are added over 2 hours. In parallel and over the same period, 64.8 g of 3% aqueous hydrogen peroxide solution are added. When the addition of the various components is complete, the reaction medium is maintained at 85°C for a further 30 minutes, 2 g of 70% tert-butyl hydroperoxide are then added and the mixture is left for a further 1 hour at the same temperature. The resulting mixture is then cooled with gentle stirring.

When the temperature of the latex obtained is close to room temperature (below 30°C), 325 g of Cartabond TSI are introduced with stirring.

The cationic aqueous dispersion obtained has the following characteristics:
- dry extract = 23.8%
- Brookfield viscosity at 23°C = 25 mPa.s
- pH = 3.7
- mean particle diameter = 113 nm

### EXAMPLE 5

The procedure of Example 4 is repeated completely up to the cooling of the product.

When the temperature of the latex obtained is close to room temperature (below 30°C), 325 g of aqueous 40% glyoxal (sold by the company Clariant) are introduced with stirring.

The cationic aqueous dispersion obtained has the following characteristics:
- dry extract = 23.5%
- Brookfield viscosity at 23°C = 25 mPa.s
- pH = 3.7
- mean particle diameter = 113 nm

### EXAMPLE 6

99.1 g of styrene, 43.6 g of 2-dimethylaminoethyl methacrylate, 108.2 g of glacial acetic acid and 0.2 g of tert-dodecanethiol are introduced, in order, into a 2 I reactor equipped with a mechanical stirring system.

The mixture is heated to 85°C ± 1°C under nitrogen and with stirring. When the temperature is reached, 1.7 g of AIBN in 19.7 g of acetone are then introduced and the mixture is left to react for a further 1 hour.

1253 g of water are then added to the polymer in order to obtain an oligomer in solution.

A continuous emulsion polymerization is performed in the oligomer solution prepared.

At a temperature maintained at 85°C, 20 g of 1% iron sulphate solution are added to the oligomer.

With the aid of metering pumps, 112.9 g of styrene, 94 g of butyl acrylate and 65.8 g of methyl methacrylate are added over 2 hours. In parallel and over the same period, 64.8 g of aqueous 3% hydrogen peroxide solution are added. When the addition of the various components is complete, the reaction medium is maintained at 85°C for a further 30 minutes, 2 g of 70% tert-butyl hydroperoxide are then added and the mixture is left for a further 1 hour at the same temperature. The mixture is then cooled with gentle stirring.

When the temperature of the latex obtained is close to room temperature (below 30°C), 99 g of Cartabond TSI are introduced with stirring.

The cationic aqueous dispersion obtained has the following characteristics:
- dry extract = 23.9%
- Brookfield viscosity at 23°C = 49 mPa.s
- pH = 3.9
- mean particle diameter = 157 nm

### EXAMPLE 7

The procedure of Example 6 is repeated completely up to the cooling of the product.

When the temperature of the latex obtained is close to room temperature (below 30°C), 332 g of Cartabond TSI are introduced with stirring.

The cationic aqueous dispersion obtained has the following characteristics:
- dry extract = 25.2%
- Brookfield viscosity at 23°C = 49 mPa.s
- pH = 3.9
- mean particle diameter = 157 nm

### EXAMPLE 8

79.2 g of styrene, 46.8 g of dimethylaminopropylmethacrylamide, 19.6 g of 80% acrylic acid, 112 g of glacial acetic acid and 5.4 g of AIBN are introduced, in order, into a 2 l reactor equipped with a mechanical stirring system.

The mixture is heated to 85°C ± 1°C with stirring and under nitrogen. When the temperature is reached, 1.4 g of AIBN in 41.8 g of glacial acetic acid are then introduced and the mixture is left to react for a further 1 hour.

534 g of water are then added to the polymer in order to obtain an oligomer in solution.

A continuous emulsion polymerization is performed in the oligomer solution prepared.

At a temperature maintained at 85°C, first 5.2 g of 1% iron sulphate solution and then 25.1 g of aqueous 6% hydrogen peroxide solution are added to the oligomer.

With the aid of metering pumps, 149.2 g of styrene, 95.2 g of butyl acrylate and 5 g of 80% acrylic acid are added over 2 hours. In parallel and over the same period, 107.2 g of aqueous 6% hydrogen peroxide solution are added. When the addition of the various components is complete, 283 g of water are added to rinse the pumps. The reaction medium is then maintained at 85°C for a further 30 minutes, 22 g of aqueous 6% hydrogen peroxide solution are then added and the mixture is left for a further 1 hour at the same temperature. The mixture is then cooled with gentle stirring.

When the temperature of the latex obtained is close to room temperature (below 30°C), 97 g of Cartabond TSI are introduced with stirring.

The cationic aqueous dispersion obtained has the following characteristics:
- dry extract = 20%
- Brookfield viscosity at 23°C = 20 mPa.s
- pH = 3.6
- mean particle diameter = 67 nm

### COMPARATIVE EXAMPLE 1 (according to the teaching of EP-A-051 144)

The preparation is similar to that of Examples 1 and 2.

99.4 g of styrene, 54.7 g of dimethylaminopropylmethacrylamide, 31.2 g of 80% acrylic acid, 99.4 g of glacial acetic acid and 1.7 g of AIBN are introduced, in order, into a 21 reactor equipped with a mechanical stirring system.

The mixture is brought to 85°C ± 1°C with stirring and under nitrogen. When the temperature is reached, the solution is left at 85°C for 1 hour. 2.1 g of AIBN in 8.3 g of acetone are then introduced and the mixture is left to react for a further 1 hour.

722.7 g of water are then added to the polymer in order to obtain an oligomer in solution.

66.2 g of this oligomer are taken for introduction into the preemulsion.

A continuous emulsion polymerization is performed in the rest of the oligomer solution.

At a temperature maintained at 85°C, 7 g of 1% iron sulphate solution and then 33.1 g of aqueous 6% hydrogen peroxide solution are added to the oligomer. With the aid of metering pumps, a preemulsion consisting of 109.4 g of styrene, 208.8 g of butyl acrylate, 66.2 g of oligomer and 489.67 g of water is added over 2 hours. In parallel and over the same period, 132.5 g of aqueous 6% hydrogen peroxide solution are added. When the addition of the various components is complete, the reaction medium is maintained at the said temperature for a further 1 hour and the mixture is then cooled with gentle stirring.

The cationic aqueous dispersion obtained has the following characteristics:
- dry extract = 26%
- Brookfield viscosity at 23°C = 42 mPa.s
- pH = 3.7
- mean particle diameter = 129 nm

### COMPARATIVE EXAMPLE 2 (according to the teaching of EP-A-051 144)

The preparation is similar to that of Example 3. 114.6 g of styrene, 62 g of dimethylaminopropylmethacrylamide, 35.8 g of 80% acrylic acid, 161.6 g of glacial acetic acid and 8 g of AIBN are introduced, in order, into a 2 I reactor equipped with a mechanical stirring system.

The mixture is brought to 85°C ± 1°C with stirring and under nitrogen. When the temperature is reached, the solution is left at 85°C for 1 hour. 2.4 g of AIBN in 67.8 g of glacial acetic acid are then introduced and the mixture is left to react for a further 1 hour.

771.4 g of water are then added to the polymer in order to obtain an oligomer in solution.

A continuous emulsion polymerization is performed in the oligomer solution prepared.

At a temperature maintained at 85°C, 7.6 g of 1% iron sulphate solution and then 38 g of aqueous 6% hydrogen peroxide solution are added to the oligomer. With the aid of metering pumps, 181.6 g of styrene and 181.6 g of butyl acrylate are added over 2 hours. In parallel and over the same period, 151.4 g of aqueous 6% hydrogen peroxide solution are added. Once the additions are complete, 20.6 g of water are added to rinse the pumps. When the addition of the various components is complete, the reaction medium is maintained at the said temperature for a further 1 hour and the mixture is then cooled with gentle stirring.

The cationic aqueous dispersion obtained has the following characteristics:
- dry extract = 32.4%
- Brookfield viscosity at 23°C = 46 mPa.s
- pH = 3.4
- mean particle diameter = 60 nm

### COMPARATIVE EXAMPLE 3 (according to the teaching of EP-A-1 180 527)

The preparation is similar to that of Examples 4 and 5.

105.7 g of styrene, 40.1 g of dimethylaminopropylmethacrylamide, and 119.9 g of glacial acetic acid are introduced, in order, into a 2 I reactor equipped with a mechanical stirring system.

The mixture is heated to 85°C ± 1°C with stirring and under nitrogen. When the temperature is reached, 2.1 g of AlBN in 13.4 g of acetone are then introduced and the mixture is left to react for a further 1 hour.

1240 g of water are then added to the polymer in order to obtain an oligomer in solution.

A continuous emulsion polymerization is performed in the oligomer solution prepared.

At a temperature maintained at 85°C, 20 g of 1% iron sulphate solution are added to the oligomer.

With the aid of metering pumps, 129.5 g of styrene and 92.5 g of butyl acrylate are added over 2 hours. In parallel and over the same period, 64.8 g of aqueous 3% hydrogen peroxide solution are added. When the addition of the various components is complete, the reaction medium is maintained at 85°C for a further 30 minutes, 2 g of 70% tert-butyl hydroperoxide are then added and the mixture is left at the same temperature for a further 1 hour. The mixture is then cooled with gentle stirring.

The cationic aqueous dispersion obtained has the following characteristics:
- dry extract = 20.6%
- Brookfield viscosity at 23°C = 25 mPa.s
- pH = 3.7
- mean particle diameter = 113 nm

### COMPARATIVE EXAMPLE 4 (according to the teaching of EP 1 180 527 A)

The preparation is similar to that of Examples 6 and 7.

99.1 g of styrene, 43.6 g of 2-dimethylaminoethyl methacrylate, 108.2 g of glacial acetic acid and 0.2 g of tert-dodecanethiol are introduced, in order, into a 2 I reactor equipped with a mechanical stirring system.

The mixture is heated to 85°C ± 1 °C with stirring and under nitrogen. When the temperature is reached, 1.7 g of AIBN in 19.7 g of acetone are then introduced and the mixture is left to react for a further 1 hour.

1253 g of water are then added to the polymer in order to obtain an oligomer in solution.

A continuous emulsion polymerization is then performed in the oligomer solution prepared.

At a temperature maintained at 85°C, 20 g of 1 % iron sulphate solution are added to the oligomer.

With the aid of metering pumps, 112.9 g of styrene, 94 g of butyl acrylate and 65.8 g of methyl methacrylate are added over 2 hours. In parallel and over the same period, 64.8 g of aqueous 3% hydrogen peroxide solution are added. When the addition of the various components is complete, the reaction medium is maintained at 85°C for a further 30 minutes, 2 g of 70% tert-butyl hydroperoxide are then added and the mixture is left at the same temperature for a further 1 hour. The mixture is then cooled with gentle stirring.

The cationic aqueous dispersion obtained has the following characteristics:
- dry extract = 22.3%
- Brookfield viscosity at 23°C = 49 mPa.s
- pH = 3.9
- mean particle diameter = 157 nm

### COMPARATIVE EXAMPLE 5

The preparation is similar to that of Example 8.

79.2 g of styrene, 46.8 g of dimethylaminopropylmethacrylamide, 19.6 g of 80% acrylic acid, 112 g of glacial acetic acid and 5.4 g of AIBN are introduced, in order, into a 2 l reactor equipped with a mechanical stirring system.

The mixture is heated to 85°C ± 1°C with stirring and under nitrogen. When the temperature is reached, 1.4 g of AIBN in 41.8 g of glacial acetic acid are then introduced and the mixture is left to react for a further 1 hour. 534 g of water are then added to the polymer in order to obtain an oligomer in solution.

A continuous emulsion polymerization is then performed in the oligomer solution prepared.

At a temperature maintained at 85°C, 5.2 g of 1% iron sulphate solution and then 25.1 g of aqueous 6% hydrogen peroxide solution are first added to the oligomer.

With the aid of metering pumps, 149.2 g of styrene, 95.2 g of butyl acrylate and 5 g of 80% acrylic acid are added over 2 hours. In parallel and over the same period, 107.2 g of aqueous 6% hydrogen peroxide solution are added. When the addition of the various components is complete, 283 g of water are added to rinse the pumps. The reaction medium is then maintained at 85°C for a further 30 minutes, 22 g of aqueous 6% hydrogen peroxide solution are then added and the mixture is left at the same temperature for a further 1 hour. The mixture is then cooled with gentle stirring.

The cationic aqueous dispersion obtained has the following characteristics:
- dry extract = 20%
- Brookfield viscosity at 23°C = 20 mPa.s
- pH = 3.6
- mean particle diameter = 67 nm

### APPLICATION EXAMPLES

### 1) Influence on sizing

The examples below show the advantageous effect of the cationic dispersions according to the invention for the surface treatment of papers, as regards their water resistance.

The quality of the sizing is assessed by means of the Cobb test, which is well known to those skilled in the art and which proceeds according to standard NF EN 20535 - ISO 535.

The amount of water absorbed after a given time is given in g/m².

The Cobb test is performed herein with a contact time of 60 seconds (Cobb₆₀).

The treatment is performed using a laboratory sizing press (Mathis padder) on a recycled paper of Tesliner type free of internal size and having a basis weight of 180 g/m².

The paper is surface-treated by applying about 10 g/m² of a sizing solution containing:
- 250 g by weight of a 10% solution of oxidized potato starch C*5591 from the company Cerestar,
- 7 g or 15 g of the dispersions of Examples 1 to 8 or of the Comparative Examples 1 to 5, corresponding to 2.8% or 6% in the size solution.

The treatment with the oxidized starch alone gives a reference Cobb₆₀ = 180 g/m².

The results of the Cobb₆₀ values are collated in Table 1.

**TABLE 1**

| **Products** | **Cobb**_{**60**} **at 2.8% (g/m**^{**2**}**)** | **Cobb**_{**60**} **at 6% (g/m**^{**2**}**)** |
|---|---|---|
| Example 1 | 103 | 40 |
| Example 2 | 80 | 36 |
| Comparative test 1 | 130 | 52 |
| Example 3 | 87 | 36 |
| Comparative test 2 | 108 | 77 |
| Example 4 | 95 | 45 |
| Example 5 | 100 | 43 |
| Comparative test 3 | 132 | 75 |
| Example 6 | 91 | 54 |
| Example 7 | 56 | 48 |
| Comparative test 4 | 139 | 98 |
| Example 8 | 149 | 58 |
| Comparative test 5 | 153 | 83 |

The results show a higher water resistance of the recycled papers treated with the cationic dispersions of the invention, when compared with the use of cationic dispersions of the prior art.

### Influence of glyoxal

These examples show the advantageous effect of using the cationic dispersions of the invention compared with the addition of the same amount of glyoxal to the formulation of a size solution at the time of use.

The same paper as previously is surface-treated by applying about 10 g/m² of a size solution containing:
- 250 g by weight of a 10% solution of oxidized potato starch C*5591 from the company Cerestar,
- 6 g or 12,75 g of the dispersion of comparative test 3,
- 1 g or 2.25 g of Cartabond® TSI or of aqueous 40% glyoxal.

The results of the Cobb₆₀ values are collated in Table 2

**TABLE 2**

| **Products** | **Cobb**_{**60**} **at 2.8% (g/m**^{**2**}**)** | **Cobb**_{**60**} **at 6% (g/m**^{**2**}**)** |
|---|---|---|
| Comparative test 3 | 132 | 75 |
| Example 4 | 95 | 45 |
| Example 5 | 100 . | 43 |
| Comparative test 3 + Cartabond® TSI | 110 | 65 |
| Comparative test 3 + aqueous glyoxal | 120 | 70 |

The results clearly show the superiority of using the cationic dispersions of the invention for the surface treatment of recycled papers, as regards their water resistance.

## Claims

1. Cationic aqueous polymer dispersion, comprising fine particles, **characterized in that** it comprises at least:
(1) the product of an emulsion polymerization of a monomer mixture comprising, by weight:
(a) from 20% to 65% of at least one optionally substituted styrene,
(b) from 35% to 80% of at least one C₁-C₁₈ (meth)acrylic ester,
(c) from 0 to 20% of at least one ethylenically unsaturated nonionic monomer other than (a) and (b),
(d) from 0 to 20% of at least one C₃-C₆ ethylenically unsaturated carboxylic acid or a corresponding salt thereof,
the sum of (a) + (b) + (c) + (d) being 100% by weight,
the monomer mixture being polymerized in the presence of an emulsifier that is the product of a solution polymerization of a monomer mixture comprising, by weight:
(e) from 15% to 50% of at least one monomer of formula (I) or of formula (II) 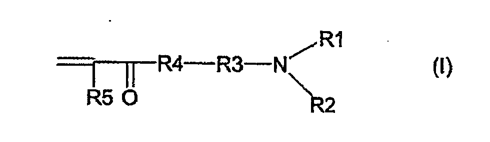 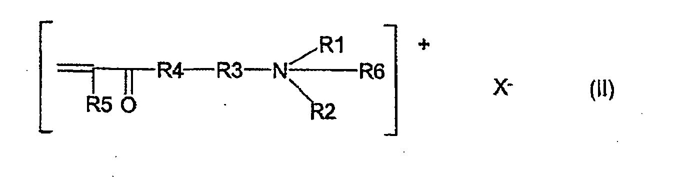 in which:
R1 and R2 are identical or different and represent a C₁-C₄ alkyl radical,
R3 represents a C₁-C₈ alkylene radical,
R4 represents O or NH,
R5 represents H or CH₃,
R6 represents a C₁-C₄ alkyl radical,
X⁻ represents OH⁻, Cl⁻, Br⁻ or CH₃-OSO₃H⁻,
(f) from 50% to 85% of at least one optionally substituted styrene,
(g) from 0 to 20% of at least one ethylenically unsaturated nonionic monomer other than e) and f),
(h) from 0 to 20% of at least one C₃-C₆ ethylenically unsaturated carboxylic acid or a corresponding salt thereof,
the sum of (e) + (f) + (g) + (h) being equal to 100% by weight,
the solution polymerization being performed in the presence of a water-miscible solvent,
(2) glyoxal.

2. Cationic aqueous polymer dispersion according to Claim 1, **characterized in that** it contains from 0.2% to 15% by dry weight of glyoxal.

3. Cationic aqueous polymer dispersion according to Claim 1, **characterized in that** it contains from 0.5% to 12% by dry weight of glyoxal.

4. Cationic aqueous polymer dispersion according to Claim 1, **characterized in that** it contains from 1 % to 8% by dry weight of glyoxal.

5. Cationic aqueous polymer dispersion according to one of Claims 1 to 4, **characterized in that** the emulsifier is an aqueous dispersion containing from 2% to 30% by weight of polymers.

6. Cationic aqueous polymer dispersion according to one of Claims 1 to 5,
**characterized in that** the emulsifier is an aqueous dispersion containing from 5% to 25% by weight of polymers.

7. Cationic aqueous polymer dispersion according to one of Claims 1 to 6, **characterized in that** the emulsifier is an aqueous dispersion containing from 10% to 20% by weight of polymers.

8. Cationic aqueous polymer dispersion according to one of Claims 1 to 7, **characterized in that** the water-miscible solvent is a saturated C₁-C₆ carboxylic acid.

9. Cationic aqueous polymer dispersion according to Claim 8, **characterized in that** the water-miscible solvent is acetic acid.

10. Process for preparing a cationic aqueous polymer dispersion comprising fine particles, **characterized by**:
(1) the preparation of an aqueous polymer dispersion by solution polymerization, in the presence of a water-miscible solvent, of a monomer mixture comprising:
(e) from 15% to 50% by weight of at least one monomer of formula (I) or of formula (II) 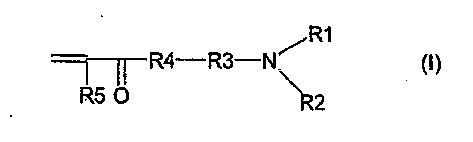 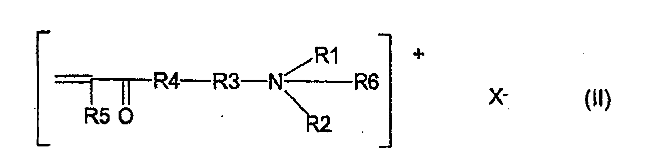 in which
R1 and R2 are identical or different and represent a C₁-C₄ alkyl radical,
R3 represents a C₁-C₈ alkylene radical,
R4 represents O or NH,
R5 represents H or CH₃,
R6 represents a C₁-C₄ alkyl radical,
X⁻ represents OH⁻, Cl⁻, Br⁻ or CH₃-OSO₃H⁻
(f) from 50% to 85% by weight of at least one optionally substituted styrene,
(g) from 0 to 20% by weight of at least one ethylenically unsaturated nonionic monomer other than e) and f)
(h) from 0 to 20% by weight of at least one C₃-C₆- ethylenically unsaturated carboxylic acid or a corresponding salt thereof, the sum of (e) + (f) + (g) + (h) being equal to 100% by weight,
followed by the addition of water to obtain the said aqueous polymer dispersion, and
(2) the emulsion polymerization of a monomer mixture comprising:
(a) from 20% to 65% by weight of at least one optionally substituted styrene,
(b) from 35% to 80% by weight of at least one C₁-C₁₈ (meth)acrylic ester,
(c) from 0 to 20% by weight of at least one ethylenically unsaturated nonionic monomer other than a) and b),
(d) from 0 to 20% by weight of at least one C₃-C₆ ethylenically unsaturated carboxylic acid or a corresponding salts thereof,
the sum of (a) + (b) + (c) + (d) being 100% by weight, in the presence of the said aqueous polymer dispersion, and
(3) addition of glyoxal.

11. Use of a cationic aqueous polymer dispersion comprising fine particles according to one of Claims 1 to 10, as an internal size or a surface size for treating cellulose-based products.

12. Use of a cationic aqueous polymer dispersion comprising fine particles, according to one of Claims 1 to 10, as a surface size for papers and boards.

13. Process for making paper or board, in which the said paper or board is prepared conventionally, but a cationic aqueous polymer dispersion according to one of Claims 1 to 8 is incorporated into the cellulose fibre pulp after it has been refined but before it has been transformed into sheets.

14. Process for making paper or board, in which the said paper or board is prepared conventionally, but a cationic aqueous polymer dispersion according to one of Claims 1 to 8 is applied to the surface of the cellulose material.
